# EUROPÄISCHE PATENTANMELDUNG

(11) **EP 1 037 178 A2**
(43) Veröffentlichungstag der Anmeldung: **20.09.2000**
(21) Anmeldenummer: 99110132.0
(22) Anmeldetag: 25.05.1999
(51) Int. Cl.: G07F 7/08, G07F 19/00, G06K 19/06

(54) **Operative Zertifikate zu Transaktionen im elektronischen Handel**

(30) Priorität: 17.03.1999 DE 19911919
(71) Anmelder: pharmed Dr. Liedtke GmbH, 82031 Grünwald (DE)
(72) Erfinder: Liedtke, Rainer K. Dr., 82027 Grünwald b. München (DE)
(74) Vertreter: Pellmann, Hans-Bernd, Dipl.-Ing.

(57) **Zusammenfassung**

Kundenseitig erstellte komplexe operativ einsetzbare Certifikate zu Transaktionen im elektronischen Handel, insbesondere zum kundenseitig beschleunigten operativen Erhalt erworbener Leistungen sowie zur Kostenersparnis von Bestellvorgängen und Vertriebsprozessen bei Transaktionen im elektronischen Handel. Die komplexen operativen Certifikate sind physische, maschinenlesbare Kombinationen elektronischer Information mit der Endkunden eine oder mehrere erworbene Leistungen eines oder mehrerer Dienstleister oder direkter Leistungserbringer auslösen und erhalten können. Sie sind für alle Handels- und Vertriebsformen geeignet bei denen der Erhalt derer Leistungen über Certifikate in Anspruch genommen werden kann.

## Beschreibung

Die Erfindung betrifft kundenseitig erstellte komplexe operative Certifikate zu Transaktionen im elektronischen Handel, insbesondere zum kundenseitig operativ beschleunigten Erhalt erworbener Leistungen und zur Kostenersparnis von Bestellvorgängen und Vertriebsprozessen im elektronischen Handel.

Es ist bekannt, daß Transaktionen im elektronischen Handel, z.B. Bestellvorgänge über computerisierte Netzwerke von Online Diensten oder Internet, in der Form vor sich gehen, daß nach computerisierter Anwahl der Adresse eines Dienstleisters oder eines direkten Leistungserbringers durch einen Kunden ein Suchvorgang auf der Softwarematrix des anbietenden Dienstleisters oder des direkten Leistungserbringers erfolgt, wobei der Kunde menügesteuert das ihm zusagende Angebot aussucht. Hierbei kann der Kunde seine Bestellung vornehmen sowie die diesbezügliche Bestätigung des Dienstleisters oder des direkten Leistungserbringers erhalten. In diesen Vorgang kann gegebenenfalls auch schon Zahlung des Kunden an den Dienstleister oder den direkten Leistungserbringer sowie die diesbezügliche Bestätigung des Dienstleisters oder des direkten Leistungserbringers integriert sein.

Dieser Vorgang verkürzt und vereinfacht, im Gegensatz zu einem physisch vor Ort erfolgenden Bestellvorgang, den Ablauf des Bestellvorganges. Er erfordert aber weitere Schritte des Endkunden um die erworbene Leistung für sich operativ auslösen zu können. Selbst wenn schon ein Zahlungsvorgang mit solch einem Vorgang abgeschlossen ist, müssen der Dienstleister oder der direkte Leistungserbringer, wie auch der Endkunde, noch mehrere Zeit- und kostenaufwendige Folgeschritte vornehmen. Dazu gehört auf Seiten des Dienstleisters oder des direkten Leistungserbringers die Erstellung eines spezifischen Dokumentes.

Dieses spezifische Dokument ist für den Endkunden ein operativ erforderliches Certifikat um den Erhalt seiner erworbenen Leistung zu bewirken. Dies kann beispielweise ein individuelles Reiseticket sein. Weiterhin ist gegebenenfalls die physische Übergabe oder Übersendung des Dokumentes erforderlich. Auf Seiten des Endkunden ist gegebenfalls die physische Abholung des Dokumentes erforderlich sowie der Einsatz des Dokumentes zur Überprüfung durch den Leistungserbringer um hierüber den Erhalt der erworbenen Leistung zu erreichen. Ein besonderer Nachteil ist, daß ein derartiges Dokument nur auf den Erhalt einer spezifischen Leistung begrenzt ist. Somit sind für den Endkunden stets mehrere solcher Dokumente für verschiedene erworbene Leistungen erforderlich.

Der Erfindung liegt die Aufgabe zugrunde, einen kundenseitig beschleunigten operativen Erhalt erworbener Leistungen sowie Kostenersparnis von Bestellvorgängen und Vertriebsprozessen bei Transaktionen im elektronischen Handel zu erreichen.

Diese Aufgabe wird dadurch gelöst, daß kundenseitig erstellte komplexe operative Certifikate eingesetzt werden, die in Teilen oder im Ganzen einmal oder mehrfach einsetzbare spezifische oder unspezifische materielle Matrices sind auf denen die elektronische Information von einer oder mehreren elektronischen Transaktionen technisch umkonfiguriert aufgebracht ist, dies in druckgraphischer, mechanischer, optischer, elektronischer, magnetischer, chemischer, biologischer Form oder als deren Kombination vorliegt und die enthaltene Information einmalig oder mehrmalig, insgesamt oder differenziert abrufbar, identifizierbar, individualisierbar, codierbar, maschinell lesbar und maschinell prüfbar ist, wobei die Umkonfiguration der elektronischen Transaktionsinformation seitens des Endkunden der Transaktion über spezifische oder unspezifische Hardware oder Software oder deren Kombination erfolgt und die Certifikate die Auslösung von einer oder mehreren Leistungen bei gleichen oder verschiedenen Dienstleistern oder direkten Leistungserbringern sequentiell oder parallel ermöglichen.

Um die Anwendbarkeit der komplexen operativen Certifikate zu erweitern, besitzen, in einer weiteren Ausbildung der Erfindung, die Certifikate multiple Codes, mit denen eine Maschinenlesbarkeit oder Maschinenprüfbarkeit auch über verschiedenene Lesemaschinen oder Prüfmaschinen ermöglicht wird.

Um die Anwendbarkeit der komplexen operativen Certifikate zu erweitern, sind, in einer weiteren Ausbildung der Erfindung, auf den Certifikaten enthaltene Informationspeicher so ausgetattet, daß diese für mehrere elektronische Transaktionen wiederholt beschreibbar, überschreibbar, lesbar und prüfbar sind.

Um die Anwendbarkeit der komplexen operativen Certifikate zu erweitern, enthält, in einer weiteren Ausbildung der Erfindung, das Certifikat für multiple Leistungen mehrerer Dienstleister oder direkter Leistungserbringer multiple druckgraphische, elektronische, magnetische oder optische Sektoren unterschiedlicher Grösse und Anzahl und die Sektoren alphanumerische, digitale oder andere maschinenlesbare Informationen oder deren Kombinationen.

Um die Anwendbarkeit der komplexen operativen Certifikate zu erweitern, besteht, in einer weiteren Ausbildung der Erfindung, die Matrix des Certifikates aus allen solchen Formaten, geometrischen Formen und Materialien, mit denen sie für den Vorgang der Auslösung entsprechender erworbener Leistungen durch den Endkunden technisch eingesetzt werden kann.

Um die Anwendbarkeit der komplexen operativen Certifikate zu erweitern, erstellt, in einer weiteren Ausbildung der Erfindung, der Endkunde die Konfigurationen des Certifikates aus Transaktionen sowohl über den eigenen Computer wie auch über ihm zur Verfügung gestellte externe Computerterminals eines Dienstleisters oder direkten Leistungserbringers.

Die sich mit der Erfindung ergebenden Vorteile bestehen darin, daß die Erstellung operativ direkt einsetzbarer Dokumente beim Endkunden und nicht beim Dienstleister oder direkten Leistungserbringer erfolgt. Der Endkunde erhält unmittelbar sowohl Bestätigung wie auch Beleg der erfolgten Transaktion mit der er in der Lage ist umgehend die erworbene Leistung auszulösen. Hierdurch können sowohl bei dem Dienstleister oder dem direkten Leistungserbringer wie auch bei dem Endkunden erheblich Kosten und Zeit gesenkt werden.

Da das Vorgehen über hohe Kapazität und hohe Geschwindigkeit verfügt, ermöglicht es mit geringem personellen Aufwand und geringer Fehlerquote einen hohen Durchsatz. Gefährdungen oder Missbrauch der Transaktionen wird über solche integrierten Verschlüsselungen des Dienstleisters oder des direkten Leistungserbringers im Certifikat vermieden, die dem Endkunden oder auch Dritten nicht zugänglich und bekannt sind.

Besonderer Vorteil ist, daß für den Kunden mehrere individualisierte elektronische Transaktionen in einem gemeinsamen Certifikat gebündelt werden können, wobei auch mehrere Stufen der Transaktionen, beispielweise Zahlungsquittungen bestimmter Transaktionen, enthalten sind, da die elektronischen Transaktionen erst im kundenseitig bedienten Computer gespeichert und hiernach vom Endkunden auf die Matrix eines gemeinsamen Certifikates konfiguriert werden. Dadurch lassen sich für den Endkunden, unabhängig von Dienstleistern oder direkten Leistungserbringern, mehrere erworbene Leistungen zu einem gemeinsamen operativen Certifikat koppeln, z.B. Reisebuchungen und Hotelbuchungen unterschiedlicher Dienstleister oder direkter Leistungserbringer,. Dies kann dabei auch überregional oder international erfolgen.

Anwendungsbereiche sind beispielweise Tickets für Hotels, Restaurants, Verkehrsunternehmen, Unterhaltungsindustrie, Finanzunternehmen, Banken, Brokerage. Die komplexen operativen Certifikate sind hierbei für den Endkunden über Codierung gegenüber Dritten gesicherte, abstrahierte Leistungsbelege zur Auslösung und zum Erhalt der von ihm erworbenenenen individuellen Leistungen.

Mit komplexen operativen Certifikaten ist auch eine Point of Sales Version im traditionellen physischen Handel möglich. Nach einem physisch erfolgenden Suchvorgang erfolgt hierbei an zu diesem Zweck vorbestimmten Computerterminals des Dienstleisters oder direkten Leistungserbringers durch den Endkunden der elektronische Kaufvorgang oder Leistungserwerb über eine individuelle Erstellung seines operativen Certifikates.

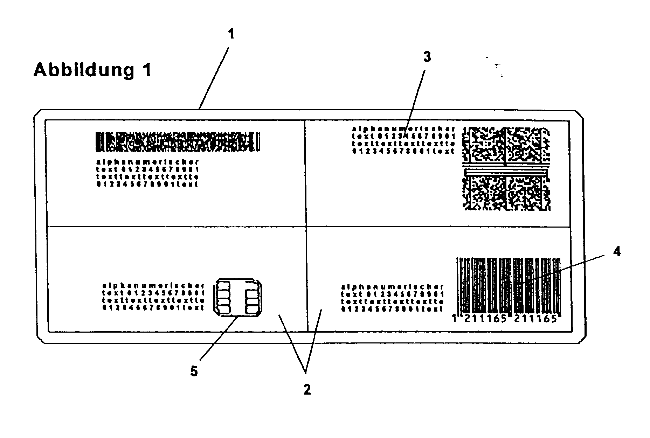

Ein Beispiel für eine technisch Ausgestaltung eines komplexen operativen Certifikates, ohne es darauf beschränken zu wollen, ist in der Abbildung 1 dargestellt. Hierbei ist es eine partiell vorgefertigte Matrix (1), die für den Einsatz in üblichen Computerdruckern geeignet ist, und die vier separate "Leistungs-Sektoren" (2) besitzt. Die Leistungssektoren bestehen ihrerseits jeweils in Printkombinationen aus für den Kunden visuell identifizierbaren alphanumerischen Zeichen (3) und unterschiedlichen digitalen Codes (4). Die Matrix enthält im Beispiel auch einen beschreibbaren Computerchip (5). Sämtliche Sektoren besitzen eine separate Maschinenlesbarkeit der enthaltenen Information, beispielweise der dem Kunden unbekannten Sicherheitscodes der Leistungserbringer. Entsprechend den in den Leistungssektoren enthaltenen verschiedenen Leistungen können diese Sektoren auch für verschiedene Leseeinrichtungen, beispielsweise unterschiedliche Barcodeleser, nach individueller Spezifikation der verschiedenen Leistungserbringer konfiguriert und codiert werden.

Kundenseitig erstellte komplexe operativ einsetzbare Certifikate zu Transaktionen im elektronischen Handel, insbesondere zum kundenseitig beschleunigten operativen Erhalt erworbener Leistungen sowie zur Kostenersparnis von Bestellvorgängen und Vertriebsprozessen bei Transaktionen im elektronischen Handel. Die komplexen operativen Certifikate sind physische, maschinenlesbare Kombinationen elektronischer Information mit der Endkunden eine oder mehrere erworbene Leistungen eines oder mehrerer Dienstleister oder direkter Leistungserbringer auslösen und erhalten können. Sie sind für alle Handels- und Vertriebsformen geeignet bei denen der Erhalt derer Leistungen über Certifikate in Anspruch genommen werden kann.

## Patentansprüche

1. Kundenseitig erstellte komplexe operative Certifikate zu Transaktionen im elektronischen Handel, dadurch gekennzeichnet, daß diese in Teilen oder im Ganzen einmal oder mehrfach einsetzbare spezifische oder unspezifische materielle Matrices sind auf denen die elektronische Information von einer oder mehreren elektronischen Transaktionen technisch umkonfiguriert aufgebracht ist, dies in graphischer Druckform, mechanischer, optischer, elektronischer, magnetischer, chemischer, biologischer Form oder als deren Kombination vorliegt und die enthaltene Information einmalig oder mehrmalig, insgesamt oder differenziert abrufbar, identifizierbar, individualisierbar, codierbar, maschinell lesbar und maschinell prüfbar ist, wobei die Umkonfiguration der elektronischen Transaktionsinformation seitens des Endkunden der Transaktion über spezifische oder unspezifische Hardware oder Software oder deren Kombination erfolgt und die Certifikate die Auslösung von einer oder mehreren Leistungen bei gleichen oder verschiedenen Dienstleistern oder direkten Leistungserbringern sequentiell oder parallel ermöglichen.

2. Komplexe operative Certifikate nach Anspruch 1, dadurch gekennzeichnet, daß auf dem Certifikat multiple Codes enthalten sind, die Maschinenlesbarkeit oder Maschinenprüfbarkeit über verschiedenene Lesemaschinen oder Prüfmaschinen ermöglichen.

3. Komplexe operative Certifikate, nach vorhergehenden Ansprüchen, dadurch gekennzeichnet, daß auf dem Certifikat enthaltene Informationspeicher so ausgetattet sind, daß diese wiederholt für mehrere elektronische Transaktionen beschreibbar, überschreibbar, lesbar und prüfbar sind.

4. Komplexe operative Certifikate, nach vorhergehenden Ansprüchen, dadurch gekennzeicnet, daß das Certifikat für multiple Leistungen mehrerer Dienstleister oder direkter Leistungserbringer multiple druckgraphische, elektronische, magnetische oder optische Sektoren unterschiedlicher Grösse und Anzahl enthält und die Sektoren alphanumerische, digitale oder andere maschinenlesbare Informationen oder deren Kombinationen enthalten.

5. Komplexe operative Certifikate, nach vorhergehenden Ansprüchen, dadurch gekennzeicnet, daß die Matrix des Certifikates aus solchen Formaten, geometrischen Formen und Materialien besteht, mit denen sie für den Vorgang der Auslösung entsprechender erworbener Leistungen technisch eingesetzt werden kann.

6. Komplexe operative Certifikate, nach vorhergehenden Ansprüchen, dadurch gekennzeicnet, daß der Endkunde die Konfigurationen des Certifikates aus Transaktionen sowohl über den eigenen Computer wie auch über zur Verfügung gestellte externe Computerterminals von Dienstleistern oder direkten Leistungserbringern erstellt.
